# EUROPÄISCHE PATENTSCHRIFT

(11) **EP 1 085 705 B1**
(45) Veröffentlichungstag und Bekanntmachung des Hinweises auf die Patenterteilung: **18.10.2006**
(21) Anmeldenummer: 00203163.1
(22) Anmeldetag: 12.09.2000
(51) Int. Cl.: H04L 12/44

(54) **Netzwerk mit mehreren Netzknoten und wenigstens einem Sternknoten**
Network with several nodes and at least one network hub
Réseau avec plusiers noeuds et au moins un noeud central

(30) Priorität: 16.09.1999 DE 19944596; 16.09.1999 DE 19944597
(43) Veröffentlichungstag der Anmeldung: 21.03.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Budde, Wolfgang O., Dr.-Ing., Philips Corporate, 52064 Aachen (DE); Zinke, Manfred, Philips Corporate, 52064 Aachen (DE); Fuhrmann, Peter, Philips Corporate, 52064 Aachen (DE)
(74) Vertreter: Volmer, Georg

(56) Entgegenhaltungen:
- US-A- 4 428 046
- US-A- 5 621 895
- US-A- 5 784 547
- HUNG KHEI HUANG ET AL.: "COLLISION AVOIDANCE TREE NETWORKS" COMPUTER NETWORKS AND ISDN SYSTEMS, NORTH HOLLAND PUBLISHING. AMSTERDAM, NL, Bd. 26, Nr. 6/8, 1. März 1994 (1994-03-01), Seiten 895-911, XP000434921 ISSN: 0169-7552

## Beschreibung

Die Erfindung bezieht sich auf ein Netzwerk mit mehreren Netzknoten, wobei wenigstens ein Teil der Netzknoten über wenigstens einen Sternknotens direkt miteinander gekoppelt sind, wobei der Sternknoten mehrere Sternschnittstellen enthält, die wenigstens einem Netzknoten zugeordnet sind, und wobei eine Sternschnittstelle jeweils in Abhängigkeit von einem Pilotsignal zur Weiterleitung einer Nachricht von dem zugeordneten Netzknoten zu den anderen Steraschnittstellen oder von einer anderen Sternschnittstelle zu wenigstens einem der zugeordneten Netzknoten vorgesehen ist. Solche Netzwerke können beispielsweise in Kraftfahrzeugen, in der Industrieautomatisierung (z.B. Sensorsysteme) und Hausautomatisierung (z.B. Lichttechnik, Alaunanlagen, Heizungsanlage, Klimatechnik etc.) eingesetzt werden.

In einem solchen Netzwerk für die Kraftfahrzeugtechnik kann z.B. das aus der Zeitschrift "Elektronik", Nr. 14, 1999, Seiten 36 bis 43 (Dr. Stefan Polenda, Georg Kroiss: "TTP: "Drive by Wire" in greifbarer Nähe") bekannte TTP-Protokoll (TTP = Time-Triggered Protocol) verwendet werden. Dieses Protokoll ermöglicht eine sichere Datenübertragung und kann daher auch in Netzwerken für sicherheitsrelevante Vorrichtungen (z.B. Bremsen) gebraucht werden. In dem erwähnten Artikel ist als Netzwerkstruktur ein Bussystem erwähnt

Das Dokument "HUNG KHEI HUANG ET AL.: ,COLLISION AVOIDANCE TREE NETWORKS' COMPUTER NETWORKS AND ISDN SYSTEMS, NORTH HOLLAND PUBLISHING. AMSTERDAM, NL, Bd. 26, Nr. 6/8, 1. März 1994 (1994-03-01), Seiten 895 - 911" zeigt eine Kolisionsvenneidung für Baum-Netawerke mit einer Kollisivnsvermeidungsschaltung (Collision avoidance switch). In dieser Schaltung wird eine Kollision von übertragenen Paketen verhindert. Zur Erhöhung der Redundanz in diesem Netzwerk wird eine aufiwendige Mehrfachübertragung vorgeschlagen.

Aus dem Dokument US-A-4 428 046 ist ein Datenverarbeitungssystem bekannt, welches eine Anzahl von über einen Sternkoppler verbundene Subsysteme enthält. Der Sternkoppler weist eine komplexe Entscheidungsschaltung zur Steuerung des Sternkopplers auf Dadurch kann immer nur ein ausgewähltes Subsystem Nachrichten durch den Sternkoppler senden. Die Entscheidungsschaltung besteht aus einem aufwendig realisierten Prioritätendecoder, der für eine bestimmte festgelegte Anzahl von Subsystemen ausgelegt ist. Redundante Schaltungskomponenten werden nicht vorgeschlagen.

Das Dokument US-A-5 784 547 zeigt ein verfahren zur fehlertoleranten Kommunikation, bei dem Netzknoten über zwei Kanäle miteinander kommunizieren. Ein Kanal ist zur Datenübertragung und der andere Kanal zur Status- bzw. Fehlerinformationsübertragung vorgesehen. Jeder Verbindung ist ein Kommunikationskontroller zugeordnet.

Der Erfindung liegt die Aufgabe zugrunde, ein Netzwerk zu schaffen, bei dem auf einfache Weise zusätzliche Leitungsverbindungen die Erhöhung der Verfügbarkeit der Netzknoten ermöglichen.

Die Aufgabe wird durch ein Netzwerk der eingangs genannten Art durch die kennzeichnenden Merkmale des Anspruches 1 gelöst.

Die dieser Erfindung zugrundeliegende Idee ist die Steuerung eines Sternknotens mittels eines Pilotsignals, das von den Netzknoten erzeugt wird. Das Pilotsignal wird vor und nach einer Nachrichtenübertragung so geändert, dass eine im Sternknoten enthaltene und einem Netzknoten zugeordnete Sternschnittstelle erkennt, wenn der zugeordnete Netzknoten das Pilotsignal verändert. Im Sternknoten werden dann die anderen Sternschnittstellen so geschaltet, dass sie nur eine Nachricht von der Sternschnittstelle erhalten, die eine Nachricht von dem zugeordneten Netzknoten empfängt.

Durch die Sternschnittstellen wird ein korrekter Leitungsabschluss am Eingang einer Sternschnittstelle erreicht und mittels des Pilotsignals eine eindeutige Steuerung des Nachrichtenverkehrs ermöglicht.

Die Verwendung eines Pilotsignals zur Steuerung des Nadmchtenverkehrs ermöglicht das wahlweise Hinzufügen redundanter Leitungsverbindungen derart, dass für jede zusätzliche Leitungsverbindung eine weitere Sternschnittstelle hinzugefügt wird. Darüber hinaus wird der Netzknoten für jede zusätzliche Leitungsverbindung um jeweils eine Schaltungskomponente zur Sendung einer mit einem Pilotsignal kombinierten Nachricht und zum Empfang einer solchen Nachricht erweitert. Zur Fehlerfindung und zur Auswahl einer Leitungsverbindung wird noch ein Steuerwerk benötigt.

Wie Patentanspruch 2 zeigt, ist jedem Netzknoten im Netzwerk eine bestimmter, periodisch sich wiederholender Zeitabschnitt zur Sendung seiner Nachrichten zugeordnet. Der Pilotsignalgenerator in einem Netzknoten signalisiert bei Aussendung eines Pilotsignals diesen Zeitabschnitt. Das Pilotsignal kann auf verschiedene Weise von der Eigentlichen Nachricht unterschieden werden. Beispielsweise verwendet das Pilotsignal einen anderen Frequenzbereich als das Signal mit der zu übertragenden Nachricht.

Patentanspruch 3 gibt ein an, dass jede Sternschnittstelle ein erstes und zweites Schaltelement und einen Pilotsignaldetektor enthält. Die Schaltelemente, die, wie Anspruch 3 beschreibt, ein schaltbarer Verstärker sein können, steuern in Abhängigkeit vom Pilotsignal den Nachrichtenfluss in einer Sternschnittstelle.

Eine Sternschnittstelle erzeugt während der Nachrichtenübertragung, die vom Pilotsignal angezeigt wird, ein Freigabesignal, dass über eine ODER-Verknüpfung den anderen Sternschnittstellen zugeführt wird, wie Anspruch 5 beschreibt. Anspruch 6 gibt an, dass die ODER-Verknüpfung als ODER-Gatter oder als Wired-OR-Verknüpfung ausgebildet sein kann.

Eine Leitungsverbindung kann beispielsweise bei symmetrischer Signalübertragung ein Leitungspaar sein.

Ausführungsbeispiele der Erfindung werden nachstehend anhand der Fig. näher erläutert. Es zeigen:
- Fig. 1: ein Netzwerk in Sternstruktur mit mehreren Netzknoten, die über einen aktiven Sternknoten gekoppelt sind,
- Fig. 2: eine erste Ausführungsform einer sternschnittstelle in einem Sternknoten,
- Fig. 3: eine erste Ausführungsform eines ersten Sternknotens,
- Fig. 4: einen Teil eines Netzknotens mit einem Pilotsignalgenerator,
- Fig. 5: ein Teil eines Zeitverlaufs zweier Signale im Netzwerk,
- Fig. 6 und 7: zwei weitere Ausführungsformen des Netzwerkes,
- Fig. 8: eine zweite Ausführungsform einer Sternschnittstelle in einem Sternknoten,
- Fig. 9: eine zweite Ausführungsform eines ersten Sternknotens,
- Fig. 10: eine Ausführungsform des Netzwerks mit zusätzlichen redundanten Komponenten und
- Fig. 11: eine weitere Ausführungsform eines Teil eines Netzknotens mit zwei Pilotsignalgeneratoren, -detektoren und einem Steuerwerk.

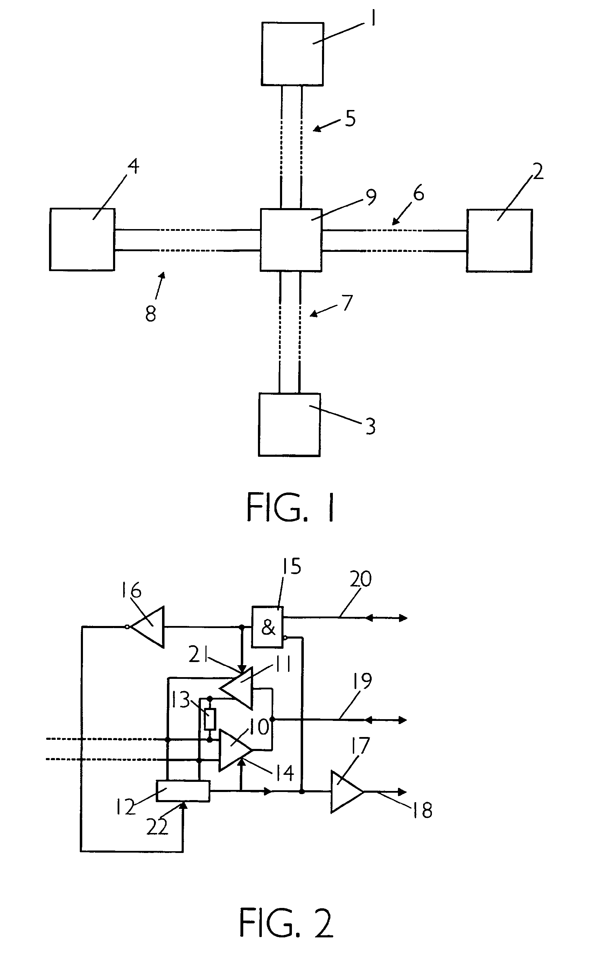

Ein Ausführungsbeispiel des erfindungsgemäßen Netzwerks ist in Fig. 1 dargestellt. Dieses Netzwerk enthält beispielsweise vier Netzknoten 1 bis 4, die jeweils über verdrillte, für eine symmetrische Signalübertragung vorgesehene Leitungspaare 5 bis 8 (twisted-pair) miteinander über einen aktiven Sternknoten 9 gekoppelt sind. Der aktive Sternknoten 9 führt eine Leitungsanpassung durch, so dass die Leitungspaare 5 bis 8 im aktiven Sternknoten 9 mit dem Wellenwiderstand abgeschlossen sind, und detektiert ein von einem Netzknoten 1 bis 4 ausgesendetes Pilotsignal. Wenn die Leitungspaare 5 bis 8 ohne aktiven Sternknoten 9 miteinander verbunden wären, entstände für jedes Leitungspaar im Sternpunkt eine Fehlanpassung durch den Impedanzsprung von Z₀ auf 1/3 Z₀, die durch die Parallelschaltung der jeweils anderen Leitungspaare verursacht wird. Zur Erzeugung eines Pilotsignals enthält noch jeder Netzknoten 1 bis 4 einen Pilotsignalgenerator.

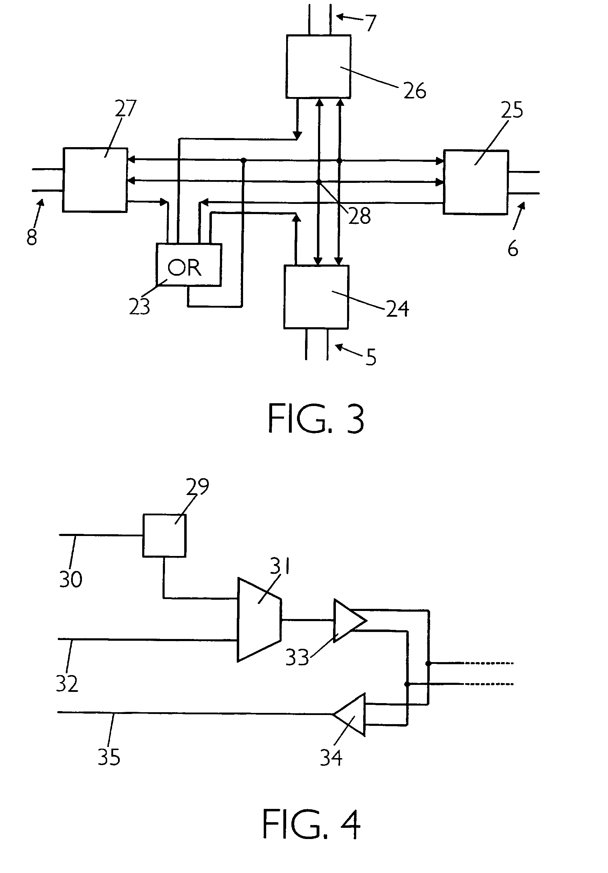

Der aktive Sternknoten 9 enthält für jedes Leitungspaar 5 bis 8 eine Sternschnittstelle, die eine Weiterleitung der Nachrichten eines sendenden Netzknotens zu allen anderen am aktiven Stern angeschlossenen Netzknoten ermöglicht. Ein Ausführungsbeispiel einer solchen Sternschnittstelle ist in Fig. 2 gezeigt. Ein Leitungspaar 5 bis 8 ist mit den Eingängen eines schaltbaren Verstärkers 10, mit den Ausgängen eines weiteren schaltbaren Verstärkers 11, mit einem Pilotsignaldetektor 12 und mit einem Abschlusswiderstand 13 verbunden. Der Wert des Abschlusswiderstandes 13 entspricht dem Wellenwiderstand und dient damit zum korrekten Leitungsabschluss. Wenn der Pilotsignaldetektor 12 ein Pilotsignal detektiert, erzeugt dieser ein Freigabesignal, welches zu einem Schalteingang 14 des schaltbaren Verstärkers 10, zu einem invertierenden Eingang eines UND-Gatters 15 und über einen Verstärker 17 und eine Leitung 18 zu einem ODER-Gatter 23 (Fig. 3) geführt wird. Wenn der schaltbare Verstärker 10 freigegeben ist, liefert dieser Daten zu einer zu einem Verknüpfungspunkt führenden Datenleitung 19. Von dieser Datenleitung 19 werden auch Daten von den anderen Sternschnittstellen empfangen und über den schaltbaren Verstärker 11 zu dem zugeordneten Leitungspaar geleitet. Über eine Leitung 20 wird noch dem nichtinvertierenden Eingang des UND-Gatters 15 ein Freigabesignal über das ODER-Gatter 23 (Fig. 3) von einer anderen Sternschnittstelle geliefert. Der nichtinvertierende Ausgang des UND-Gatters 15 ist mit einem Schalteingang 21 des schaltbaren Verstärkers 11 sowie über einen Inverter 16 mit einem Freigabeeingang 22 des Pilotsignaldetektors verbunden.

Ein schaltbarer Verstärker 10 oder 11 kann auch als Reihenschaltung aus Verstärker und Schalter (Schaltelement) ausgeführt werden. Im geschlossenen Zustand dieses Schalters wird das Ausgangssignal des Verstärkers weitergeleitet.

Der Pilotsignaldetektor überprüft, ob der zugeordnete Netzknoten durch Aussenden des Pilotsignals zeigt, dass er Nachrichten bzw. Daten übertragen wird. Ist dies der Fall, wird der Verstärker 11 deaktiviert (im allgemeinen wird er bereits in diesem Zustand sein) und der Verstärker 10 aktiviert bzw. freigegeben. Das von dem zugeordneten Leitungspaar kommende Nachrichtensignal wird zur Leitung 19 geführt und damit an die anderen Sternschnittstellen weitergegeben. Zusätzlich wird durch das vom Pilotsignaldetektor 12 erzeugte Freigabesignal den anderen Sternschnittstellen signalisiert, dass sie ihrerseits ihren Verstärker 11 aktivieren oder freigeben sollen, um die Nachrichten an die jeweiligen zugeordneten Netzknoten weiterzuleiten.

Wie in Fig. 3 dargestellt, werden die Leitungen 18 aller Sternschnittstellen in dem ODER-Gatter 23 verknüpft. Weiter zeigt Fig. 3 vier Sternschnittstellen 24 bis 27, die jeweils mit den Leitungspaaren 5 bis 8 gekoppelt sind. Der Ausgang des ODER-Gatters 23 ist mit den Leitungen 20 (Fig. 2) jeder Sternschnittstelle 24 bis 27 verbunden. Die Leitungen 19 (Fig. 2) jeder Sternschnittstelle 24 bis 27 sind miteinander über einen Schaltungsknoten 28 verknüpft.

Um zu verhindern, dass ein von einem Leitungspaar 5 bis 8 kommendes Signal in dasselbe wieder zurückgespeist wird, wird über den invertierenden Eingang des UND-Gatters 15 der Verstärker 11 deaktiviert oder abgeschaltet. Um andererseits zu verhindern, dass der einem anderen Netzknoten zugeordnete Pilotsignaldetektor seinerseits seinen Verstärker 10 aktiviert, wird das über die Leitung 20 (Fig. 2) transportierte Freigabesignal über UND-Gatter 15 und Inverter 16 zur Unterdrückung des Freigabesignals für den Pilotsignaldetektor 12 verwendet. Damit wird auch der Verstärker 10 über seinen Schalteingang 14 abgeschaltet oder deaktiviert. Der Pilotsignaldetektor 12, dessen Pilotsignal bewirkt, dass die zugeordnete Sternschnittstelle Daten empfängt oder empfangen soll, bleibt allerdings weiterhin aktiv, um das Ende der Datenübertragung erkennen zu können.

Zur einwandfreien Funktion des aktiven Sternknotens 9 ist es erforderlich, dass die Netzknoten 1 bis 4 ihre Nachrichten zeitlich nicht-überlappend versenden. Darüber hinaus muss sichergestellt werden, dass für die Dauer einer gewissen Totzeit kein Netzknoten aktiv ist oder Nachrichten bzw. Daten sendet. In diesem Zustand wird der Sternknoten völlig undurchlässig geschaltet (d.h. alle Verstärker 10 und 11 sind deaktiviert). In diesem Zustand wartet eine Sternschnittstelle 24 bis 27 in dem Sternknoten 9 auf ein neues Pilotsignal, mit dem ein Übertragungswunsch von Nachrichten angegeben wird.

Grundsätzlich gilt, dass das Pilotsignal immer vor dem Beginn der tatsächlichen Nachrichtenübertragung ausgesendet werden muss. Nur dann ist sichergestellt, dass der aktive Sternknoten 9 rechtzeitig konfiguriert wird und auch der Beginn der Nachricht alle anderen Netzwerkknoten erreicht.

In Fig. 4 ist dargestellt, auf welche Weise das Pilotsignal in einem Netzknoten 1 bis 4 erzeugt und über ein Leitungspaar 5 bis 8 übertragen wird. Wenn ein Netzknoten eine Nachricht oder Daten zu anderen Netzknoten senden möchte, erhält ein Pilotsignalgenerator 29 über eine Leitung 30 beispielsweise ein Startsignal. Der Pilotsignalgenerator 29 liefert dann ein Pilotsignal zu einem Multiplexer 31, dem noch von einer Leitung 32 zu sendende Daten zugeführt werden. Das von dem Multiplexer 31 abgegebene Signal wird über einen Verstärker 33 auf das zugeordnete Leitungspaar gegeben. Ein von einem anderen Netzknoten stammendes Signal wird von dem Leitungspaar über einen Verstärker 34 auf eine Leitung 35 zur weiteren Verarbeitung geführt.

Der in Fig. 4 gezeigte Multiplexer kann dabei sowohl als zeitlicher Multiplexer (Senden des Pilotsignals als Start- und Stopsignal jeweils vor und nach der eigentlichen Nachricht) oder als Frequenzmultiplexer ausgestaltet sein. Das bedeutet, dass das Pilotsignal entweder als ein andauerndes Signal die gesamte zu übertragene Nachricht begleiten kann oder dass es in Form eines Start- und Stopsignals ausgesendet werden kann. Dabei kann z.B. durch unterschiedliche Dauer sichergestellt werden, dass das Start- und Stopsignal sich hinreichend unterscheiden und der Wechsel zwischen Übertragungszeitraum und Übertragungspause nicht verwechselt wird.

Das Pilotsignal kann auf verschiedene Weisen erzeugt werden. Eine Möglichkeit besteht darin, dass es ein periodisches Signal sein kann, dessen Frequenzbereich außerhalb des für die Übertragung der Nachrichten genutzten Frequenzbereiches liegt. Dieser Frequenzbereich kann ober- oder unterhalb des Nutzfrequenzbandes liegen, aber auch bei entsprechender Spezifikation des Nutzbandes aufgrund der schmalbandigen Natur des Pilotsignals in "Lücken" des Nutzfrequenzbandes. Eine weitere Möglichkeit ist, die eigentliche Nachricht als symmetrisches Gegentaktsignal und das Pilotsignal als Gleichtaktsignal zu übertragen. Das Gleichtaktsignal kann sowohl in Form einer konstanten Spannung als auch in Form eines periodischen Signals gestaltet werden. Eine dritte Möglichkeit für das Pilotsignal ist, dass dieses in Form der Nachrichtenübertragung voran- und nachgestellter, spezieller Symbole realisiert wird.

Die vorgeschlagene Erfindung eignet sich besonders gut für die Anwendung in Netzwerken, die nach dem TTP-Protokoll für eine Echtzeit-Kommunikation beispielsweise im Kraftfahrzeug arbeiten (vgl. Elektronik Heft 14/1999: "TTP: "Drive by Wire" in greifbarer Nähe", Seiten 36 bis 43). Bei diesem Protokoll ist zum einen festgelegt, wann welcher Sender mit Hilfe des konfliktfreien TDMA-Zugriffsverfahren (TDMA = Time Division Multiple Access) senden darf, und zum anderen ist eine Totzeit (Interframegap) definiert, in der kein Sender senden darf. Durch diesen Mechanismus ist unmittelbar gewährleistet, dass der aktive Sternknoten 9 immer wieder in den Ruhezustand zurückgeht. Es ist also mit dem TDMA-Verfahren gewährleistet, dass immer nur ein Netzknoten zu einer vorbestimmten Zeit eine Nachricht versenden darf und dazu mittels des von ihm ausgesendeten Pilotsignals im Sternknoten die ihm zugeordnete Sternschnittstelle zur Weiterleitung von Nachrichten aktiviert oder veranlasst.

Ein zusätzlicher Vorteil besteht darin, dass zur Ansteuerung des sogenannten Bus-Wächters (bus guardian) ein Steuersignal im Netzwerkknoten vorliegen muss, das zeitlich kurz vor dem Beginn der Nachrichtenübertragung liegt. Dieses Steuersignal kann unmittelbar zur Ansteuerung des Pilotsignalgenerators 29 verwendet werden, indem dieses Steuersignal auf der Leitung 30 dem Pilotsignalgenerator 29 zugeführt wird.

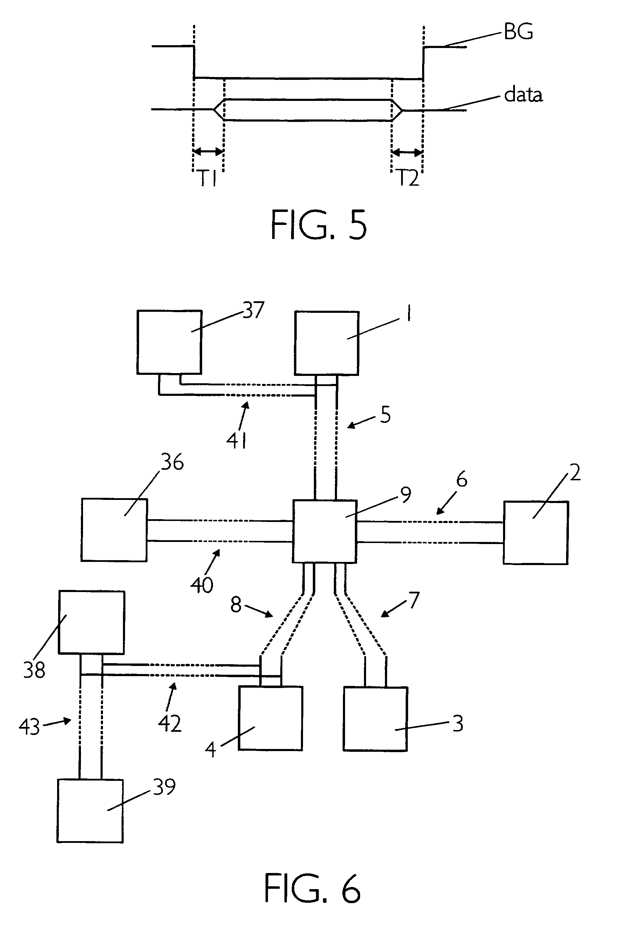

In Fig. 5 ist dieses Steuersignal mit BG und die eigentliche Nachricht mit data gekennzeichnet. Das Steuersignal BG ist während der Aussendung einer Nachricht beispielsweise in einem niedrigen Zustand. Während dieses niedrigen Zustandes des Steuersignals soll die Nachricht übertragen werden. Ein erster Zeitraumes T1 nach einem Wechsel des Steuersignals in den niedrigen Zustand und ein zweiter Zeitraum T2 vor einem Wechsel des Steuersignals in den hohen Zustand müssen dabei so gewählt werden, dass der aktive Sternknoten 9 korrekt konfiguriert ist und bleibt, um eine Nachricht fehlerlos übertragen zu können. Es bleibt noch zu erwähnen, dass das TTP-Protokoll unterschiedliche (konstante) Nachrichtenverzögerungszeiten zwischen verschiedenen Netzknoten im Netzwerk unterstützt. Damit verstößt die durch den aktiven Sternknoten 9 hervorgerufene Verzögerungszeit nicht gegen das TTP-Protokoll.

Das erfindungsgemäße Netzwerk ermöglicht die Aussendung eines Pilotsignals mit jeder Art von Signalübertragung für die Nachrichten von einem Netzknoten 1 bis 4. Beispielsweise kann für die Nachrichtenübertragung eine symmetrische Gegentaktübertragung, Einzelleiterübertragung oder trägerfrequenzmodulierte Übertragung gewählt werden. Bei gleichtaktmäßiger Kopplung der Leitungspaare 5 bis 8 könnte ggf. auch mit der Nachrichtenübertragung eine Versorgungsspannung übertragen werden.

Ein weiteres Ausführungsbeispiel eines Netzwerkes ist in Fig. 6 dargestellt. Dieses Netzwerk ist mit dem in der Fig. 1 dargestellten Netzwerk (Netzknoten 1 bis 4 und Leitungspaare 5 bis 8) fast identisch bis auf vier zusätzliche Netzknoten 36 bis 39. Der Netzknoten 36 ist direkt über ein weiteres Leitungspaar 40 mit dem aktiven Sternknoten 9 gekoppelt. Der Netzknoten 37 ist an das Leitungspaar 5 über ein Leitungspaar 41 angeschlossen. Der Netzknoten 38 ist über ein Leitungspaar 42 mit dem Leitungspaar 8 und der Netzknoten 39 über ein Leitungspaar 43 mit dem Leitungspaar 42 verbunden.

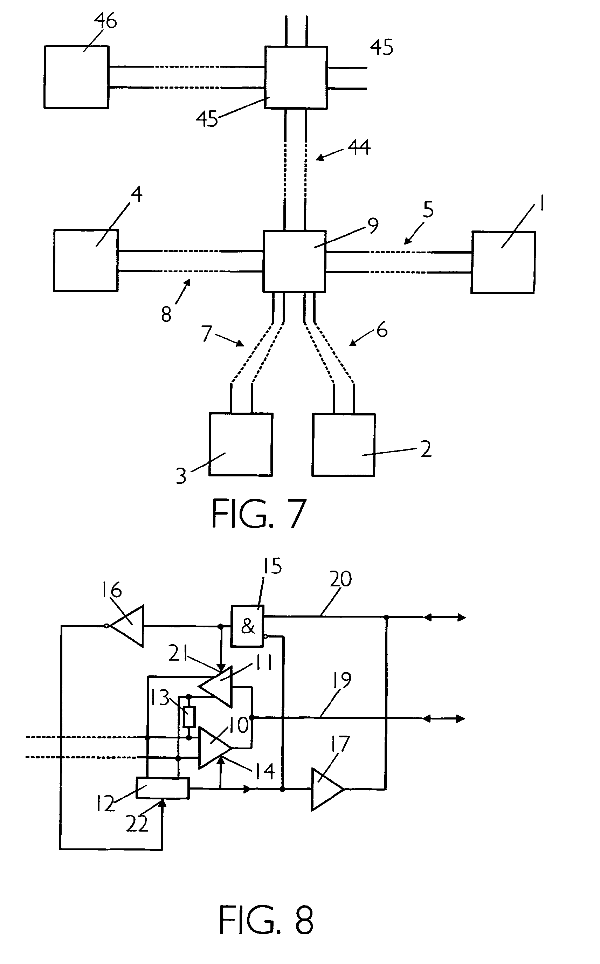

Das in Fig. 7 gezeigte Ausführungsbeispiel zeigt wieder die aus der Fig. 1 bekannte Topologie des Netzwerkes mit den Netzknoten 1 bis 4, den Leitungspaaren 5 bis 8 und dem aktiven Sternknoten 9. Über ein Leitungspaar 44 ist der aktive Sternknoten 9 mit einem weiteren aktiven Sternknoten 45 gekoppelt, an den wiederum weitere Netzknoten angeschlossen sein können. Beispielhaft ist hier ein Netzknoten 46 eingezeichnet.

Anstelle des in der Fig. 3 benötigten ODER-Gatters 23 kann diese ODER-Verknüpfung auch direkt durch eine Wired-OR-Verknüpfung realisiert werden. Eine für die Wired-OR-Verknüpfung geeignete Sternschnittstelle zeigt Fig. 8. Diese Sternschnittstelle nach der Fig. 8 ist bis auf die schaltungsmäßige Verknüpfung des Ausgangs des Verstärkers 17 identisch mit der Sternschnittstelle der Fig. 2. In der Fig. 8 führt der Ausgang des Verstärkers 17 nicht auf die Leitung 18, sondern auf die Leitung 20 (Wired-OR). Damit ist der Ausgang des Verstärkers 17 mit dem invertierenden Eingang des UND-Gatters 15 verbunden. Der Verstärker 17 ist in der Fig. 2 als "Push-Pull"-Verstärker und in der Fig. 8 als "Open-Collector"- bzw. "Open-Drain"-Verstärker realisiert.

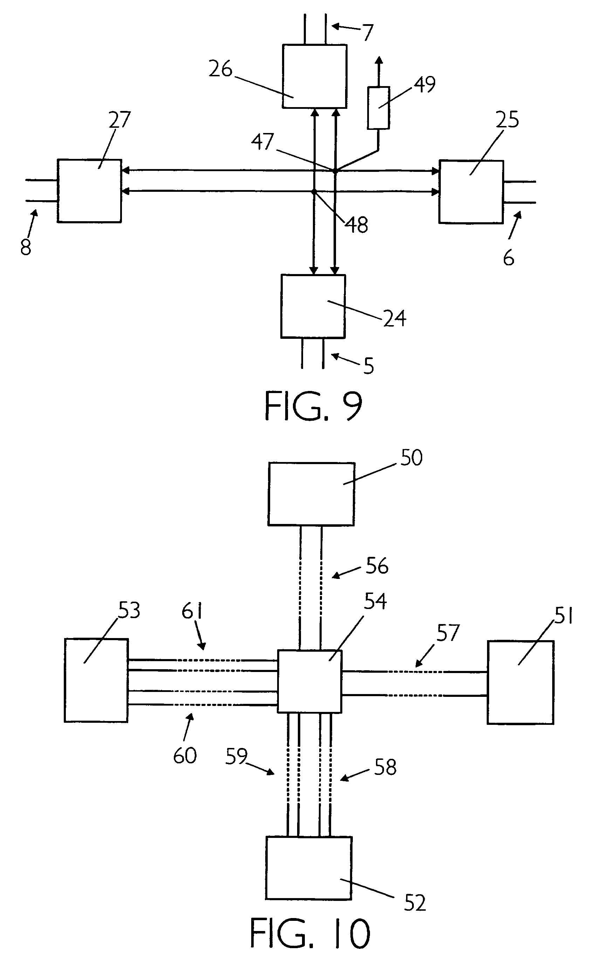

Durch diese Wired-OR-Verknüpfung verringert sich der Verdrahtungsaufwand und es entfällt das ODER-Gatter 23 in dem aktiven Sternknoten 9 und es ergibt sich eine einfache Erweiterbarkeit des Netzwerks mit weiteren Netzknoten durch Wegfall des ansonsten in verschiedenen Varianten vorzuhaltenden ODER-Gatters. Die Sternschnittstellen 24 bis 27 sind in diesem Fall mit ihrem jeweiligen Leitungen 19 und 20 verbunden, so dass sich dadurch, wie in Fig. 9 gezeigt, zwei Schaltungsknoten 47 und 48 bilden. Zusätzlich ist nur ein Widerstand 49 vorzusehen, der einerseits mit dem Schaltungsknoten 47 und andererseits mit einer Versorgungsspannung gekoppelt ist. Dieser Widerstand bildet zusammen mit den Verstärkern 17 jeder Sternschnittstelle die Wired-OR-Verknüpfung.

Um die Verfügbarkeit von Netzknoten in einem Netzwerk zu erhöhen, sind wie in Fig. 10 dargestellt, mehrere Leitungspaare und damit die zugeordnete Schaltungskomponente zur Erzeugung eines Pilotsignals (vgl. Fig.4) verdoppelt. Das Netzwerk nach Fig. 10 enthält vier Netzknoten 50 bis 53 und einen Sternknoten 54. Die Netzknoten 50 und 51 sind über jeweils ein Leitungspaar 56 und 57 und die Netzknoten 52 und 53 über jeweils zwei Leitungspaare 58 bis 61 mit dem Sternknoten 54 gekoppelt. Das bedeutet, dass der Netzknoten 52 über das Leitungspaar 58 und 59 und der Netzknoten 53 über das Leitungspaar 60 und 61 mit dem Sternknoten 54 verbunden ist.

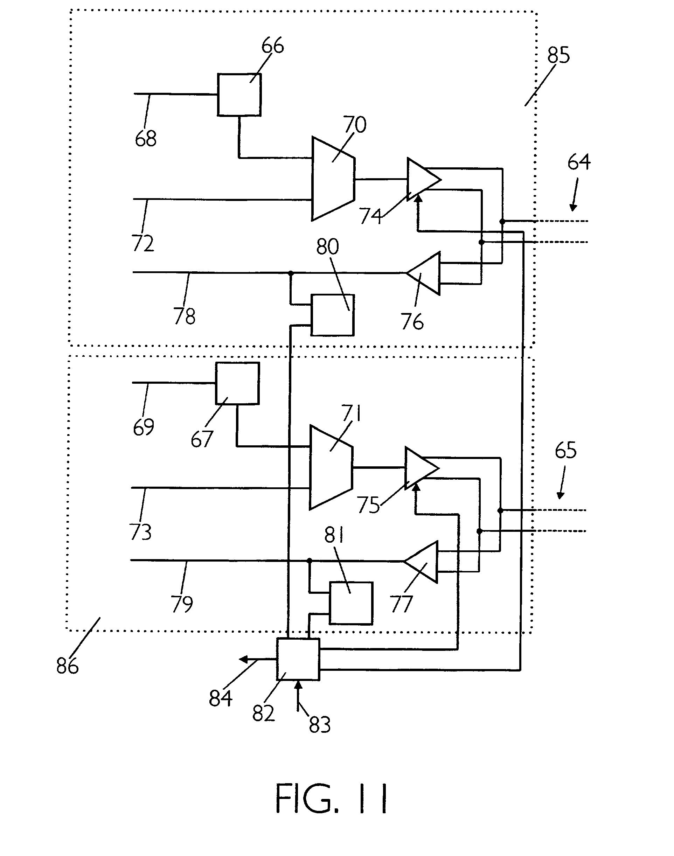

In Fig. 11 ist dargestellt, wie ein Pilotsignal in einem Netzknoten 52 und 53 erzeugt und über eines der Leitungspaare 64 oder 65 gesendet wird. Zur Erzeugung eines Pilotsignals dienen die Pilotsignalsgeneratoren 66 und 67. Durch Zuführung eines Steuersignals auf den Leitungen 68 oder 69 von einem Steuerwerk 82 wird bestimmt, welcher Pilotsignalgenerator (66 oder 67) ein Pilotsignal erzeugt. Der Pilotsignalgenerator 66 bzw. 67 liefert ein solches Pilotsignal zu einem zugehörigen Multiplexer 70 bzw. 71. Der Multiplexer 70 bzw. 71 erhält noch eine Nachricht oder Daten über eine Leitung 72 bzw. 73. Das Ausgangssignal des Multiplexers 70 bzw. 71 wird über einen schaltbaren Verstärker 74 bzw. 75 dem jeweiligen Leitungspaar 64 bzw. 65 zugeführt.

Von dem Sternknoten 54 stammende Daten werden über das Leitungspaar 64 bzw. 65 einem Verstärker 76 bzw. 77 zugeleitet. Der Verstärker 76 bzw. 77 liefert die Daten über eine Leitung 78 bzw. 79 zu weiteren Schaltungskomponenten des Netzknotens.

Mit dem Ausgang jedes Verstärkers 76 bzw. 77 ist ein Pilotsignaldetektor 80 bzw. 81 verbunden. Wenn von einen Pilotsignaldetektor 80 oder 81 ein Pilotsignal detektiert worden ist, wird dies einem Steuerwerk 82 (state machine) mitgeteilt. Dieses Steuerwerk 82 steuert die beiden schaltbaren Verstärker 74 und 75. Ferner steuert das Steuerwerk 82 die Pilotsignalgeneratoren 66 und 67 über die Leitungen 68 und 69. Von dem Netzknoten wird das schon oben erwähnte Startsignal auf einer Leitung 83 zum Steuerwerk 82 geführt, welches daraus ein Steuersignal für die Pilotsignalgeneratoren 66 bzw. 67 bildet. Über eine Leitung 84 kann das Steuerwerk 82 dem Netzknoten beispielsweise Zustände melden.

Die Schaltungselemente 66, 68, 70, 72, 74, 76, 78 und 80 bilden eine erste Schaltungskomponente 85 und die Schaltungselemente 67, 69, 71, 73, 75, 77, 79 und 81 eine zweite Schaltungskomponente 86. Die Schaltungskomponenten 85 und 86 sind jeweils identisch aufgebaut.

Dieses Steuerwerk 82 verwaltet die am Netzknoten angeschlossenen Leitungspaare 64 und 65 so, dass ständig die Funktionsfähigkeit der Leitungspaare 64 und 65 und der Schaltungskomponente 85 und 86 überprüft wird.

Während des Nachrichtenempfangs wird von dem Steuerwerk 82 geprüft, ob das Pilotsignal tatsächlich über beide Leitungspaare 64 und 65 eintrifft. Das Eintreffen eines Pilotsignals auf einem der beiden redundanten Leitungspaare signalisiert den Beginn eines Nachrichtenempfangs. Das Steuerwerk 82 prüft während eines bestimmten Zeitabschnittes, ob nach Eintreffen des ersten Pilotsignals auf einem der Leitungspaare 64 bzw. 65 das Pilotsignal auf dem anderen Leitungspaar eingetroffen ist. Ist dies nicht der Fall, kann davon ausgegangen werden, dass das andere Leitungspaar fehlerhaft ist.

Gesendet wird grundsätzlich nur auf einem der redundanten Leitungspaare. Um zu erreichen, dass auch bei Ausfall einer Schaltungskomponente 85 bzw. 86 die Kommunikation aufrechterhalten bleiben kann, wird bei jedem Sendevorgang geprüft, ob tatsächlich das die Nachricht begleitende Pilotsignal ausgesendet wird. Der Aufbau des Sternknotens stellt sicher, dass über das für das Aussenden einer Nachricht gerade nicht verwendete Leitungspaar das Pilotsignal zum sendenden Netzknoten zurückgeführt wird. Auch hierbei prüft das Steuerwerk 82, ob innerhalb eines anderen bestimmten Zeitabschnittes nach Beginn der Aussendung der Nachricht das Pilotsignal auf dem anderen Leitungspaar eintrifft.

Die Kombination dieser beiden Prüfungen erlaubt es, einen Defekt der zur Zeit für die Aussendung von Nachrichten verwendete Schaltungskomponente 85 bzw. 86 sowie der Leitungspaare 64 bzw. 65 zu erkennen und die intakte Schaltungskomponente mit dem zugeordneten intakten Leitungspaar von dem Steuerwerk 82 umzuschalten.

Wenn kein Fehler vorliegt und damit das Steuerwerk 82 beide Leitungspaare 64 und 65 und die beiden Schaltungskomponenten 85 und 86 als funktionsfähig registriert hat, werden die Schaltungskomponenten 85 und 86 beispielsweise abwechselnd zu der zugeordneten Sternschnittstelle senden. Im Fehlerfall sendet nur die als fehlerfrei registrierte Schaltungskomponente 85 oder 86.

## Patentansprüche

1. Netzwerk mit mehreren Netzknoten,
wobei wenigstens ein Teil der Netzknoten über wenigstens einen Sternknoten direkt miteinander gekoppelt sind,
wobei der Sternknoten mehrere Sternschnittstellen enthält, die wenigstens einem Netzknoten zugeordnet sind, und
wobei eine Sternschnittstelle jeweils in Abhängigkeit von einem Pilotsignal zur Weiterleitung einer Nachricht von dem zugeordneten Netzknoten zu den anderen Sternschnittstellen oder von einer anderen Sternschnittstelle zu wenigstens einem der zugeordneten Netzknoten vorgesehen ist,
**dadurch gekennzeichnet,**
**dass** wenigstens einem Netzknoten mehr als eine Sternschnittstelle zugeordnet ist, von denen nur eine in Abhängigkeit vom Zustand des zugeordneten Netzknotens zum Weiterleiten von an alle dem Netzknoten zugeordnete Sternschnittstellen während eines bestimmten Zeitabschnittes gesendete Nachrichten vorgesehen ist, und
**dass** wenigstens ein Netzknoten wenigstens zwei Pilotsignalgeneratoren und zwei Multiplexer zur Kombination des vom zugeordneten Pilvtsigaalgenerator erzeugten Pilotsignals mit einer Nachricht enthält und
**dass** ein Steuerwerk zur Entscheidung vorgesehen ist, über welche Leitungsverbindung und über welche zugeordnete Sternschnittstelle die mit dem Pilotsignal kombinierte Nachricht gesendet wird.

2. Netzwerk nach Anspruch 1,
**dadurch gekennzeichnet,**
**dass** jedem Netzknoten im Netzwerk eine bestimmter, periodisch sich wiederholender Zeitabschnitt zur Sendung seiner Nachrichten zugeordnet ist und
**dass** ein im Netzknoten enthaltener Pilotsignalgenerator ein Pilotsignal erzeugt, das den gesamten zugeordneten Zeitabschnitt oder den Anfang und das Ende des Zeitabschnitts angibt.

3. Netzwerk nach Anspruch 1,
**dadurch gekennzeichnet,**
**dass** jede Stenschnittstelle ein erstes und zweites Schaltelement und einen Pilotsignaldetektor enthält,
**dass** das erste Schaltelement im aktivierten Zustand zum Durchlassen einer Nachricht von dem zugeordneten Netzknoten zu den anderen Sternschnittstellen und das zweite Schaltelement im aktivierten Zustand zum Durchlassen einer Nachricht von den anderen Sternschnittstellen zu dem zugeordneten Netzknoten vorgesehen ist und
**dass** der Pilotsignaldetektor in Abhängigkeit von einem Pilotsignal des zugeordneten Netzknotens zur Aktivierung eines ersten Schaltelements und zur Deaktivierung eines zweiten Schaltelements oder zur Deaktivierung des ersten Schaltelements und zur Aktivierung des zweiten Schaltelements vorgesehen ist.

4. Netzwerk nach Anspruch 3,
**dadurch gekennzeichnet,**
**dass** das erste und zweite Schaltelement jeweils ein schaltbarer Verstärker ist.

5. Netzwerk nach Anspruch 1,
**dadurch gekennzeichnet,**
**dass** eine Sternschnittstelle zur Erzeugung eines Freigabesignals vorgesehen ist, wenn der zugeordnete Netzknoten mit Hilfe des Pilotsignals eine Nachrichtenübertragung angibt, und
**dass** die das Freigabesignal jeder Sternschnittstelle transportierenden Leitungen über eine ODER-Verknüpfung zur Weiterleitung des Freigabesignal zu allen Sternschnittstellen des Sternknotens gekoppelt sind.

6. Netzwerk nach Anspruch 5,
**dadurch gekennzeichnet,**
**dass** die ODER-Verknüpfung als ODER-Gatter oder als Wired-OR-Verknüpfung ausgebildet ist.

7. Netzwerk nach Anspruch 3,
**dadurch gekennzeichnet,**
**dass** das Steuerwerk zur Überprüfung der Funktionsfähigkeit der Sternschnittstellen, der Leitungsverbindungen und einer Schaltungskomponente im Netzknoten vorgesehen ist, und
**dass** die Schaltungskomponente zur Bildung der Nachricht mit dem Pilotsignal und zum Empfang eine solchen Nachricht vorgesehen ist, indem während des Nachrichtenempfangs das Steuerwerk durch Auswertung von Pilotsignaldetektoren zur Überprüfung des Vorhandenseins des Pilotsignals auf den verschiedenen Leitungsverbindungen und während der Nachrichtenaussendung zur Überprüfung des Vorhandenseins des Pilotsignals auf allen Leitungsverbindungen außer der die ausgesendete Nachricht übertragende Leitungsverbindung vorgesehen ist.

## Claims

1. A network comprising a plurality of network nodes,
in which at least part of the network nodes are directly mutually coupled via at least one star node, in which the star node contains a plurality of star interfaces which are assigned to at least one network node and in which one star interface is always provided to convey a message from the assigned network node to the other star interfaces or from another star interface to at least one of the assigned network nodes in dependence on a pilot signal, **characterized in that** at least more than one star interface is assigned to one network node, of which star interfaces only one is provided for conveying messages sent during a specific time section to all star interfaces assigned to the network node in dependence on the status of the assigned network node, and **in that** at least one network node includes at least two pilot signal generators and two multiplexers for combining the pilot signal generated by the assigned pilot signal generator with a message and **in that** a control unit is provided for deciding as to which line connection and which assigned star interface are to be used for sending the message combined with the pilot signal.

2. A network as claimed in claim 1, **characterized in that** a certain periodically recurring time section is assigned to each network node in the network for the transmission of the network node messages and **in that** a pilot signal generator contained in the network node generates a pilot signal that denotes either the whole assigned time section or the beginning and end of the time section.

3. A network as claimed in claim 1, **characterized in that** each star interface comprises a first and a second switch element and a pilot signal detector, **in that** the first switch element in activated state is provided for allowing a message to pass from the assigned network node to the other star interfaces and the second switch element in activated state is provided for allowing a message to pass from the other star interfaces to the assigned network node and **in that** the pilot signal detector is provided for activating a first switch element and deactivating a second switch element or deactivating the first switch element and activating the second switch element in dependence on a pilot signal from the assigned network node.

4. A network as claimed in claim 3, **characterized in that** the first and second switch elements are each a switchable amplifier.

5. A network as claimed in claim 1, **characterized in that** a star interface is provided for generating a release signal when the assigned network node denotes a message transmission via a pilot signal and **in that** the lines transporting the release signal of each star interface are coupled via an OR combination and to all star interfaces of the star node to convey the release signal.

6. A network as claimed in claim 5, **characterized in that** the OR combination is an OR gate or a wired OR combination.

7. A network as claimed in claim 3, **characterized in that** the control unit is provided for testing the operability of the star interfaces, of the line connections and of a circuit component in the network node, and **in that** the circuit component is arranged for forming the message together with the pilot signal and for receiving such a message provided that during the reception of the message the control unit is arranged for checking the presence of the pilot signal on the various line connections by evaluation of pilot signal detectors, and during the sending of the messages is arranged for checking the presence of the pilot signal on all line connections except for the line connection that conveys the message sent.

## Revendications

1. Réseau avec plusieurs noeuds de réseau
dans lequel au moins une partie des noeuds de réseau sont couplés directement l'un à l'autre par l'intermédiaire d'au moins un noeud central,
dans lequel le noeud central contient plusieurs interfaces centrales qui sont affectées à au moins un noeud de réseau et
dans lequel une interface centrale est respectivement prévue en fonction d'un signal pilote pour la transmission d'un message du noeud de réseau affecté vers les autres interfaces centrales ou d'une autre interface centrale vers au moins un des noeuds de réseau affectés,
**caractérisé en ce**
**qu'**il est affecté à au moins un noeud de réseau plus d'une interface centrale dont seule une est prévue, en fonction de l'état du noeud de réseau affecté, à la transmission de messages transmis à toutes les interfaces centrales affectées au noeud central pendant un segment temporel déterminé et
**qu'**au moins un noeud de réseau contient au moins deux générateurs de signaux pilotes et de multiplexeurs en vue de la combinaison du signal pilote produit par le générateur de signaux pilotes affecté avec un message et
**qu'**il est prévu une unité de commande pour décider par l'intermédiaire de quelle connexion de ligne et par l'intermédiaire de quelle interface centrale affectée le message combiné au signal pilote est transmis.

2. Réseau selon la revendication 1,
**caractérisé en ce**
**qu'**un segment temporel déterminé, se répétant périodiquement, est affecté à chaque noeud de réseau dans le réseau pour la transmission de ses messages et qu'un générateur de signaux pilotes contenu dans le noeud de réseau produit un signal pilote qui indique tout le segment temporel affecté ou le début et la fin du segment temporel.

3. Réseau selon la revendication 1,
**caractérisé en ce**
**que** chaque interface centrale contient des premier et deuxième éléments de commutation et un détecteur de signaux pilotes,
**que** le premier élément de commutation est prévu à l'état activé pour laisser passer un message du noeud de réseau affecté vers les autres interfaces centrales et le deuxième élément de commutation à l'état activé pour laisser passer un message des autres interfaces centrales vers le noeud de réseau affecté et
**que** le détecteur de signaux pilotes est prévu en fonction d'un signal pilote du noeud de réseau affecté pour l'activation d'un premier élément de commutation et pour la désactivation d'un deuxième élément de commutation ou pour la désactivation du premier élément de commutation et pour l'activation du deuxième élément de commutation.

4. Réseau selon la revendication 3,
**caractérisé en ce que** les premier et deuxième éléments de commutation sont respectivement un amplificateur commutable.

5. Réseau selon la revendication 1,
**caractérisé en ce**
**qu'**une interface centrale est prévue pour la production d'un signal de déblocage lorsque le noeud de réseau affecté indique à l'aide du signal pilote une transmission de messages et que les lignes transportant le signal de déblocage de chaque interface centrale sont couplées par l'intermédiaire d'une liaison OU en vue de la transmission du signal de déblocage vers toutes les interfaces centrales du noeud central.

6. Réseau selon la revendication 5,
**caractérisé en ce**
**que** la liaison OU est conçue comme une grille OU ou comme une liaison OU câblée.

7. Réseau selon la revendication 3,
**caractérisé en ce**
**que** l'unité de commande est prévue pour le contrôle de la fonctionnalité des interfaces centrales, des connexions de ligne et d'un composant de circuit dans le noeud de réseau et que le composant de circuit est prévu pour la formation du message avec le signal pilote et pour la réception d'un tel message par le fait que, pendant la réception du message, l'unité de commande est prévue par l'évaluation de détecteurs de signaux pilotes en vue du contrôle de la présence du signal pilote sur les différentes connexions de ligne et, pendant la transmission de messages, en vue du contrôle de la présence du signal pilote sur toutes les connexions de lignes, hormis la connexion de ligne transmettant le message transmis.
